# EUROPEAN PATENT APPLICATION

(11) **EP 2 096 809 A1**
(43) Date of publication of application: **02.09.2009**
(21) Application number: 08152167.6
(22) Date of filing: 29.02.2008
(51) Int. Cl.: H04L 12/58, H04L 29/06, G06Q 10/00

(54) **System and method for dynamically updating message and list indicators**

(71) Applicant: Research In Motion Limited, Waterloo, Ontario N2L 3W8 (CA)
(72) Inventor: Brown, Michael K., Fergus, ON, N1M 2Z5 (CA); Brown, Michael S., Kitchener, ON, N2K 4J4 (CA); Kirkup, Michael G., Waterloo, ON, N2J 4Y3 (CA); Babu, George, Toronto, ON, M6S 5A2 (CA)
(74) Representative: Phillips, Emily Elizabeth

(57) **Abstract**

Systems and methods for processing messages within a wireless communications system are disclosed. At least part of an encrypted message is received at a device for which it is intended. A security indicator on the device indicates that a message is encrypted. The message is decrypted, and it is determined whether the decrypted message includes a logical attachment. If there is such a logical attachment, an attachment indicator on the device indicates that the encrypted message includes an attachment associated with the message independent of the encryption attachment itself. The indicators may be updated via direct user action, or transparently and free from direct user input to said device.

## Description

### BACKGROUND

### 1. Field of the Invention

Certain exemplary embodiments disclosed herein relate generally to an electronic messaging system that is capable of processing encoded and/or encrypted messages and information. In particular, certain exemplary embodiments disclosed herein are directed to a system and/or method in which one or more indicators are associated with an electronic message displayed on a mobile wireless communications device and activated to indicate to a user of the mobile wireless communications device an aspect of the message that is at least not initially known to the device. For example, one or more indicators may indicate whether a received message is encrypted and/or includes any attachments apart from the encoding and/or encryption data itself. Thus, any displayed indicators are consistent with the actual properties of the received message.

### 2. Related Art

Exchanging cryptographically encoded secure electronic messages and data, such as, for example, e-mail messages, is well known. In many known electronic message exchange schemes, signatures, encryption or both are commonly used to ensure the integrity and confidentiality of information being exchanged between a sender and a recipient of the electronic messages. In an e-mail system, for example, the sender of an e-mail message may either sign the message, encrypt the message or both sign and encrypt the message. These actions may be performed using well-known standards, such as, for example, Secure Multipurpose Internet Mail Extensions (S/MIME), OpenPGP, and numerous other secure e-mail standards.

Generally, an e-mail client operating on a mobile wireless communications device is responsible for receiving and processing received e-mail messages. For example, when an e-mail message is received, many aspects of the message can be conveyed in the indicators (e.g., icons, textual descriptions, flags, checkboxes, and the like) that are displayed in a message list of the e-mail client. Two such exemplary aspects are whether the message includes an attachment, and whether the message is an S/MIME message. Indicators often are helpful to a user of the mobile wireless communications device, for example, to sort through e-mail messages in search of a particular e-mail message or attachment to a particular e-mail message, to determine whether decryption will be necessary (in which case a key may need to be entered), etc.

### BRIEF DESCRIPTION OF THE DRAWINGS

Exemplary embodiments of the present invention will be better understood and appreciated in conjunction with the following detailed description of exemplary embodiments taken together with the accompanying drawings, in which:

FIG. 1 is an overall system wide schematic view of an exemplary wireless e-mail communication system incorporating a mobile wireless communications device with the descriptive error messaging in accordance with an exemplary embodiment of the present invention;

FIG. 2 is a block diagram of a further exemplary communication system including multiple networks and multiple mobile communication devices;

FIG. 3 is an illustrative schematic block diagram of an exemplary mobile wireless communications device;

FIG. 4 is an illustrative schematic block diagram of an exemplary mobile wireless communications device according to an exemplary embodiment;

FIG. 5A is an illustrative view of an exemplary e-mail inbox on a mobile device showing e-mail message indicators before an S/MIME e-mail message is opened;

FIG. 5B is an illustrative view of an exemplary e-mail inbox on a mobile device showing e-mail message indicators after the e-mail message is opened according to an exemplary embodiment; and

FIG. 6 is an illustrative flow diagram of an exemplary operational scenario for dynamically updating message list indicators according to an exemplary embodiment.

### DETAILED DESCRIPTION OF EXEMPLARY EMBODIMENTS

In the case of encrypted S/MIME messages, a problem exists because some aspects of the message cannot be determined when an encrypted e-mail message is received, because the e-mail message is encrypted. For example, one such aspect that cannot be determined is whether the message includes logical attachments.

More particularly, when a message sender composes an encrypted S/MIME message, the sender may include message body text and any number of attachments. These logical message parts are encoded according to the MIME specification, and then the entire MIME structure is encrypted. The resulting binary data, in turn, is placed inside an "attachment" part of an e-mail message with a particular content type that identifies it as encrypted S/MIME data. Thus, the e-mail message that is actually sent to the recipient, at the internet transport level, may appear to be a message with a single attachment. However, as noted above, the logical contents of that message (e.g., what the recipient expects to see when the message is decrypted and rendered) may include message body text and any number of attachments. The outer S/MIME attachment is really just an "envelope" for the logical contents of the message. However, until that envelope is "opened" (e.g., decrypted) the recipient cannot detect any information about the logical contents. Specifically, for example, the recipient cannot determine whether the logical contents include an attachment.

Typically, e-mail clients will deal with the lack of information by choosing a consistent approach that is occasionally incorrect. For example, in Microsoft® Outlook®, the e-mail client always displays the attachment indicator for encrypted S/MIME messages, even though some of these messages do not contain logical attachments. In certain mobile wireless communication devices that accommodate S/MIME transmissions, the message list never displays the attachment indicator for encrypted S/MIME messages, even though some of these messages do contain attachments.

In view of the foregoing, we have now identified an efficient and easy to implement system and method for reducing inconsistencies with indicators indicating message properties and the actual message properties. Program logic is provided for opening at least a part of a message received by a mobile device and/or for enabling a user to open at least part of a message received by a mobile device, and for activating at least two indicators. At least one of the indicators corresponds to an aspect of the message that is at least not initially apparent based on the message's content. For example, indicators may correspond to whether the message is encoded and/or encrypted and whether the encoded and/or encrypted message includes any attachments independent of the encoding and/or encryption itself, e.g., indicating whether there are any logical attachments to the message.

According to an exemplary embodiment of the present disclosure, techniques for processing electronic messages are provided. A server is capable of receiving an encoded message intended for a mobile device. Program logic resident on the server is capable of processing the encoded message at the server to forward at least part of the encoded message to the mobile device. A wireless communications device capable of receiving messages from the server may include program logic for determining whether a message is encoded and whether a message includes an attachment independent of any encoding attachments. One or more indicators may be displayed on the wireless communications device to indicate whether the message is encoded and whether the message includes an attachment independent of any encoding attachments.

The foregoing exemplary embodiments provide a solution to the problem of having inconsistencies between message indicators and actual message properties. More particularly, indicators associated with messages received by an e-mail client may be updated once the required information becomes available so that the indicators become consistent with the message properties. These techniques may be used in connection with any message properties or aspects at least not initially apparent based on the message's content and/or information available to the e-mail client. The indicators may be updated via direct user action, or transparently and/or free from direct user input to said device.

Exemplary advantages attendant with various embodiments of the invention described above are provided by the method and system of dynamically updating message list indicators on the device disclosed and described herein with reference to the drawings.

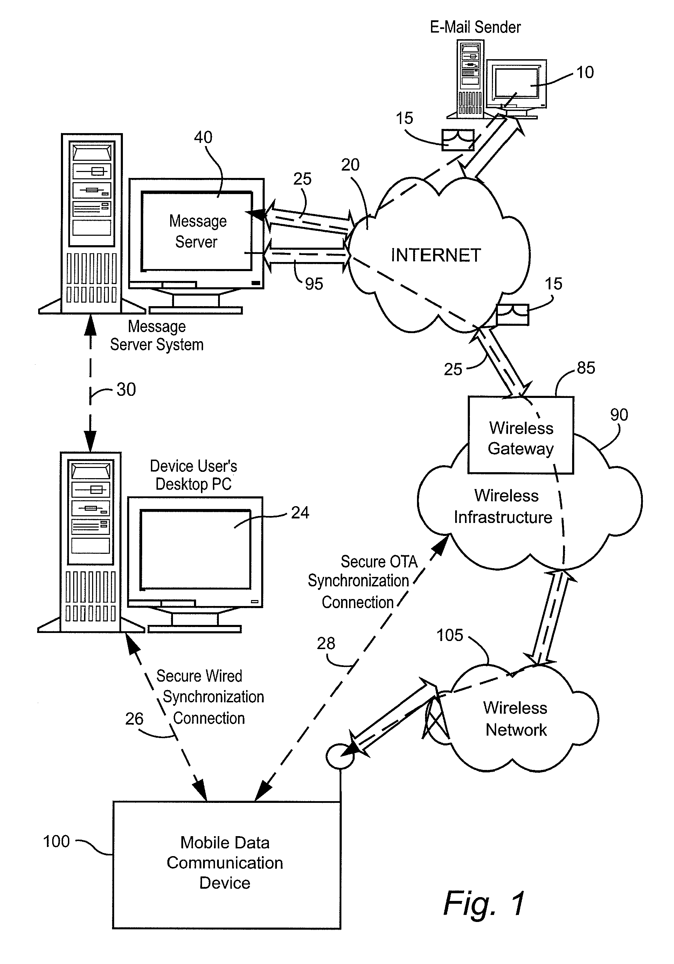

FIG. 1 is an overview of an example communication system in which a wireless communication device may be used. One skilled in the art will appreciate that there may be hundreds of different topologies, but the system shown in FIG. 1 helps demonstrate the operation of the encoded message processing systems and methods described in the present application. There may also be many message senders and recipients. The simple system shown in FIG. 1 is for illustrative purposes only, and shows perhaps the most prevalent Internet e-mail environment where security is not generally used.

FIG. 1 shows an e-mail sender 10, the Internet 20, a message server system 40, a wireless gateway 85, wireless infrastructure 90, a wireless network 105 and a mobile communication device 100.

An e-mail sender system 10 may, for example, be connected to an ISP (Internet Service Provider) on which a user of the system 10 has an account, located within a company, possibly connected to a local area network (LAN), and connected to the Internet 20, or connected to the Internet 20 through a large ASP (application service provider) such as America Online (AOL). Those skilled in the art will appreciate that the systems shown in FIG. 1 may instead be connected to a wide area network (WAN) other than the Internet, although e-mail transfers are commonly accomplished through Internet-connected arrangements as shown in FIG. 1.

The message server 40 may be implemented, for example, on a network computer within the firewall of a corporation, a computer within an ISP or ASP system or the like, and acts as the main interface for e-mail exchange over the Internet 20. Although other messaging systems might not require a message server system 40, a mobile device 100 configured for receiving and possibly sending e-mail will normally be associated with an account on a message server. Perhaps the most common message servers are Microsoft Exchange^{™}, Novell GroupWise™ and Lotus Domino^{™}. These products are often used in conjunction with Internet mail routers that route and deliver mail. These intermediate components are not shown in FIG. 1, as they do not directly play a role in the secure message processing described below. Message servers such as server 40 typically extend beyond just e-mail sending and receiving; they also include dynamic database storage engines that have predefined database formats for data like calendars, to-do lists, task lists, e-mail and documentation.

The wireless gateway 85 and infrastructure 90 provide a link between the Internet 20 and wireless network 105. The wireless infrastructure 90 determines the most likely network for locating a given user and tracks the user as they roam between countries or networks. A message is then delivered to the mobile device 100 via wireless transmission, typically at a radio frequency (RF), from a base station in the wireless network 105 to the mobile device 100. The particular network 105 may be virtually any wireless network over which messages may be exchanged with a mobile communication device.

As shown in FIG. 1, a composed e-mail message 15 is sent by the e-mail sender 10, located somewhere on the Internet 20. This message 15 is normally fully in the clear and uses traditional Simple Mail Transfer Protocol (SMTP), RFC822 headers and Multipurpose Internet Mail Extension (MIME) body parts to define the format of the mail message. These techniques are all well known to those skilled in the art. The message 15 arrives at the message server 40 and is normally stored in a message store. Most known messaging systems support a so-called "pull" message access scheme, wherein the mobile device 100 must request that stored messages be forwarded by the message server to the mobile device 100. Some systems provide for automatic routing of such messages which are addressed using a specific e-mail address associated with the mobile device 100. In an embodiment described in further detail below, messages addressed to a message server account associated with a host system such as a home computer or office computer used by the user of a mobile device 100 are redirected from the message server 40 to the mobile device 100 as they are received.

Regardless of the specific mechanism controlling the forwarding of messages to the mobile device 100, the message 15, or possibly a translated or reformatted version thereof, is sent to the wireless gateway 85. The wireless infrastructure 90 includes a series of connections to wireless network 105. These connections could be Integrated Services Digital Network (ISDN), Frame Relay or T1 connections using the TCP/IP protocol used throughout the Internet. As used herein, the term "wireless network" is intended to include at least one of three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple Access (CDMA) networks, (2) the Groupe Special Mobile or the Global System for Mobile Communications (GSM) and the General Packet Radio Service (GPRS) networks, and (3) third-generation (3G) networks or beyond like Enhanced Data-rates for Global Evolution (EDGE), Universal Mobile Telecommunications Systems (UMTS) and High-Speed Packet Access (HSPA). Some older examples of data-centric network include the Mobitex^{™} Radio Network and the DataTAC^{™} Radio Network. Examples of older voice-centric data networks include Personal Communication Systems (PCS) networks like GSM, and TDMA systems.

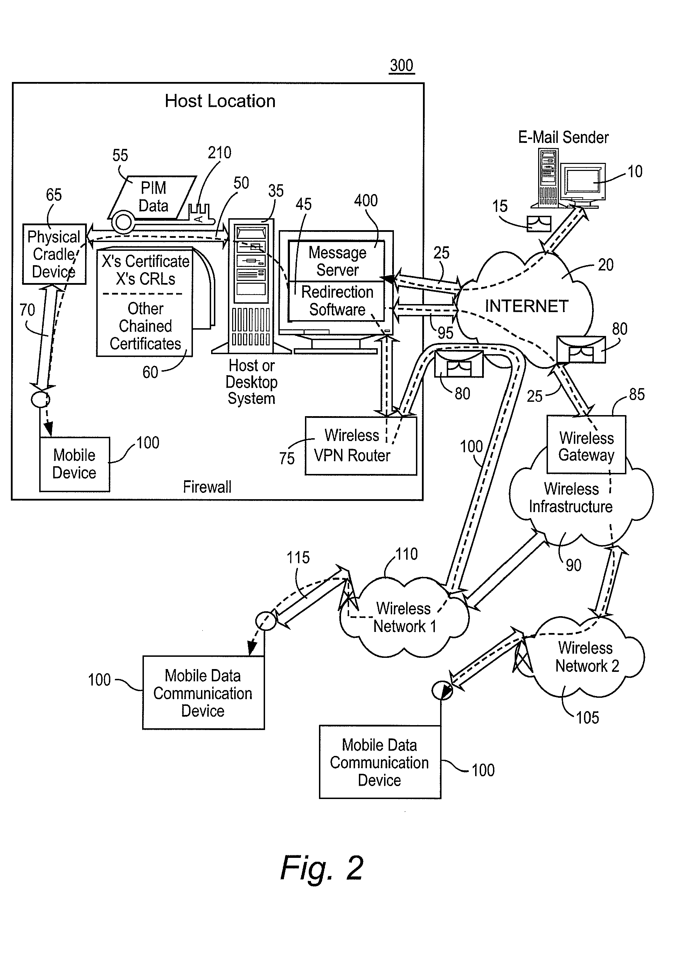

FIG. 2 is a block diagram of a further example communication system including multiple networks and multiple mobile communication devices. The system of FIG. 2 is substantially similar to the FIG. 1 system, but includes a host system 300, a redirection program 45, a mobile device cradle 65, a wireless virtual private network (VPN) router 75, an additional wireless network 110 and multiple mobile communication devices 100. As described above in conjunction with FIG. 1, FIG. 2 represents an overview of a sample network topology. Although the encoded message processing systems and methods described herein may be applied to networks having many different topologies, the network of FIG. 2 is useful in understanding an automatic e-mail redirection system mentioned briefly above.

The central host system 300 will typically be a corporate office or other LAN, but may instead be a home office computer or some other private system where mail messages are being exchanged. Within the host system 300 is the message server 400, running on some computer within the firewall of the host system, that acts as the main interface for the host system to exchange e-mail with the Internet 20. In the system of FIG. 2, the redirection program 45 enables redirection of data items from the server 400 to a mobile communication device 100. Although the redirection program 45 is shown to reside on the same machine as the message server 400 for ease of presentation, there is no requirement that it must reside on the message server. The redirection program 45 and the message server 400 are designed to co-operate and interact to allow the pushing of information to mobile devices 100. In this installation, the redirection program 45 takes confidential and non-confidential corporate information for a specific user and redirects it out through the corporate firewall to mobile devices 100. A more detailed description of the redirection software 45 may be found in the commonly assigned United States Patent 6,219,694 ("the '694 Patent"), entitled "System and Method for Pushing Information From A Host System To A Mobile Data Communication Device Having A Shared Electronic Address", and issued to the assignee of the instant application on April 17, 2001 which is hereby incorporated into the present application by reference. This push technique may use a wireless friendly encoding, compression and encryption technique to deliver all information to a mobile device, thus effectively extending the security firewall to include each mobile device 100 associated with the host system 300.

As shown in FIG. 2, there may be many alternative paths for getting information to the mobile device 100. One method for loading information onto the mobile device 100 is through a port designated 50, using a device cradle 65 in some embodiments. This method tends to be useful for bulk information updates often performed at initialization of a mobile device 100 with the host system 300 or a computer 35 within the system 300. The other main method for data exchange is over-the-air using wireless networks to deliver the information. As shown in FIG. 2, this may be accomplished through a wireless VPN router 75 or through a traditional Internet connection 95 to a wireless gateway 85 and a wireless infrastructure 90, as described above. The concept of a wireless VPN router 75 is new in the wireless industry and implies that a VPN connection could be established directly through a specific wireless network 110 to a mobile device 100. Using a wireless VPN router 75 has only recently been available and could be used with Internet Protocol (IP) Version 6 (IPV6). This protocol provides enough IP addresses to dedicate an IP address to every mobile device 100 and thus make it possible to push information to a mobile device 100 at any time. A principal advantage of using this wireless VPN router 75 is that it could be an off-the-shelf VPN component, thus it would not require a separate wireless gateway 85 and wireless infrastructure 90 to be used. A VPN connection may comprise a Transmission Control Protocol (TCP)/IP or User Datagram Protocol (UDP)/IP connection to deliver the messages directly to the mobile device 100. If a wireless VPN 75 is not available then a link 95 to the Internet 20 is the most common connection mechanism available and has been described above.

In the automatic redirection system of FIG. 2, a composed e-mail message 15 leaving the e-mail sender 10 arrives at the message server 400 and is redirected by the redirection program 45 to the mobile device 100. As this redirection takes place the message 15 is re-enveloped, as indicated at 80, and a possibly proprietary compression and encryption algorithm can then be applied to the original message 15. In this way, messages being read on the mobile device 100 are no less secure than if they were read on a desktop workstation such as 35 within the firewall. All messages exchanged between the redirection program 45 and the mobile device 100 may use this message repackaging technique. Another goal of this outer envelope is to maintain the addressing information of the original message except the sender's and the receiver's address. This allows reply messages to reach the appropriate destination, and also allows the "from" field to reflect the mobile user's desktop address. Using the user's e-mail address from the mobile device 100 allows the received message to appear as though the message originated from the user's desktop system 35 rather than the mobile device 100.

With reference back to the port 50 and/or cradle 65 connectivity to the mobile device 100, this connection path offers many advantages for enabling one-time data exchange of large items. For those skilled in the art of personal digital assistants (PDAs) and synchronization, the most common data exchanged over this link is Personal Information Management (PIM) data 55. When exchanged for the first time this data tends to be large in quantity, bulky in nature and requires a large bandwidth to get loaded onto the mobile device 100 where it can be used on the road. This serial link may also be used for other purposes, including setting up a private security key 111 such as an S/MIME or PGP specific private key, the Certificate (Cert) of the user and their Certificate Revocation Lists (CRLs) 60. The private key is exchanged so that the desktop 35 and mobile device 100 share one personality and one method for accessing all mail. The Cert and CRLs are normally exchanged over such a link because they represent a large amount of the data that is required by the device for S/MIME, PGP and other public key security methods.

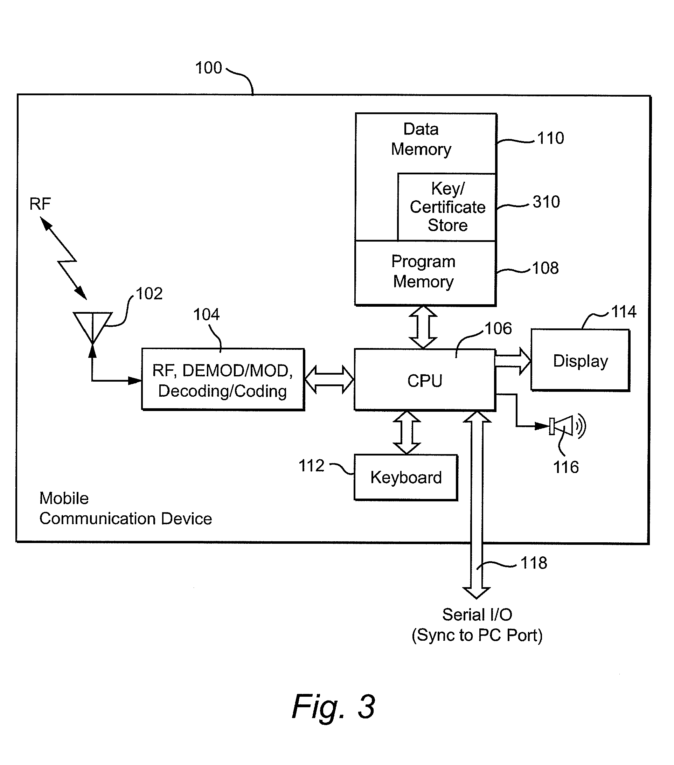

As depicted in FIG. 3, mobile communications device 100 includes a suitable RF antenna 102 for wireless communication to/from wireless network 20. RF, demodulation/ modulation and decoding/coding circuits 104 are provided. As those in the art will appreciate, such circuits may involve possibly many digital signal processors (DSPs), microprocessors, filters, analog and digital circuits and the like. However, since such circuitry is known in the art, it is not further described herein.

The mobile communications device 100 will also typically include a main control CPU 106 that operates under the control of a stored program in program memory 108, and which has access to data memory 110. CPU 106 also communicates with a conventional keyboard 112 and display 114 (for example, a liquid crystal display or LCD) and audio transducer or speaker 116. A portion of the data memory 310 is available for storing data required for decrypting encrypted messages, such as, for example, private keys, digital certificates, and the like. Suitable computer program executable code is stored in portions of the program memory 108 to constitute stored program logic for receiving and using new or added private keys and/or digital certificates or the like as described below (for example, via a wired serial I/O port or the wireless RF antenna 102).

As depicted in FIG. 1, a secure wired synchronization connection 26 (for example, between serial I/O ports of the user's base unit 24 and the wireless device 100) is typically provided for normal data synchronization purposes (for example, to synchronize databases in the two devices with respect to such things as calendars, to-do lists, task lists, address books, etc.). Part of prior data synchronization processes has included a program logic such as Cert Sync for maintaining synchronization between cryptographic message certificates. If a secure over the air (OTA) synchronization connection 28 is available, it may also be used by Cert Sync to maintain synchronization of cryptographic message certificates.

As previously described, there is a communications link (for example, depicted in dotted lines at 30 in FIG. 1) typically found between the device user's base unit 24 and a system message server 14. Accordingly, there is an existing communication path that may be utilized for passing synchronization data from the user's base unit 24 via channel 30, the server 14, Internet 12, wireless gateway 16 and wireless infrastructure 18 via the OTA synchronization connection 28.

E-mail messages generated using the S/MIME and PGP techniques may include encrypted information, a digital signature on the message contents, or both. In signed S/MIME operations the sender takes a digest of a message and signs the digest using the sender's private key. A digest generally refers to a checksum, cyclic redundancy check (CRC) or other non-reversible operation such as a hash of the message, which is then signed. The signed digest is appended to the outgoing message, possibly along with the certificate of the sender and possibly any required certificates or CRLs. The receiver of this signed message must also take a digest of the message, compare this digest with the digest appended to the message, retrieve the sender's public key, and verify the signature on the appended digest. If the message content has been changed, the digests will be different or the signature on the digest will not verify properly. If the message is not encrypted, this signature does not prevent anyone from seeing the contents of the message, but does ensure that the message has not been tampered with and is from the actual person as indicated on the "from" field of the message.

The receiver may also verify the certificate and CRL if they were appended to the message. A certificate chain comprises a certificate along with a number of other certificates required to verify that the original certificate is authentic. While verifying the signature on a signed message, the receiver of the message will also typically obtain a certificate chain for the signing certificate and verify that each certificate in the chain was signed by the next certificate in the chain, until a certificate is found that was signed by a root certificate from a trusted source, such as, for example, a large Public Key Server (PKS) associated with a Certificate Authority (CA), such as, for example, Verisign or Entrust, both prominent companies in the field of public key cryptography. Once such a root certificate is found, a signature can be verified and trusted, since both the sender and receiver trust the source of the root certificate.

In encrypted S/MIME message operations, a one-time session key is generated and used to encrypt the body of the message, typically with a symmetric cipher, such as, for example, Triple DES. The session key is then encrypted using the receiver's public key, typically with a public key encryption algorithm like RSA. If the message is addressed to more than one receiver, the same session key is encrypted using the public key of each receiver. The encrypted message body, as well as all encrypted session keys, is sent to every receiver. Each receiver must then locate its own session key, possibly based on a generated Recipient Info summary of the receivers that may be attached to the message, and decrypt the session key using its private key. Once the session key is decrypted, it is then used to decrypt the message body. The S/MIME Recipient Info attachment can also specify the particular encryption scheme that must be used to decrypt the message. This information is normally placed in the header of the S/MIME message. Those skilled in the art will appreciate that these operations relate to an illustrative example of S/MIME messaging and its associated encoding operations, namely encryption. It will also be understood that the instant disclosure is in no way limited thereto.

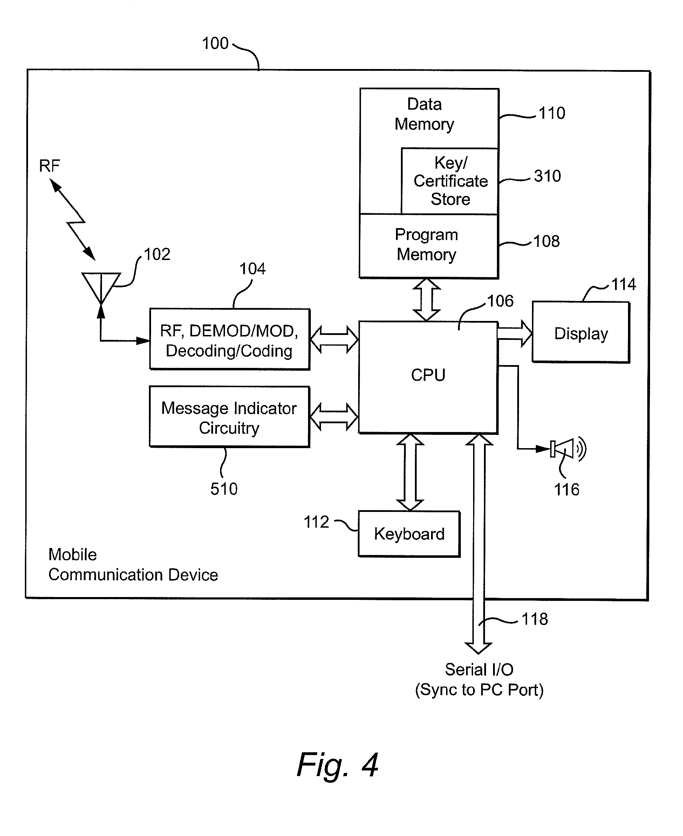

FIG. 4 is an illustrative schematic block diagram of an exemplary mobile wireless communications device according to an exemplary embodiment. FIG. 4 is like FIG. 3, except that it also includes message indicator circuitry 510. The message indicator circuitry 510 is configured to dynamically update one or more message list indicators to reflect the currently known state(s) of the message(s). Thus, using message indicator circuitry 510, it is possible to advantageously provide indicators for messages that are updated once required information becomes available so that the indicators become consistent with the message properties. The message indicator circuitry may be in the form of program logic operable to perform these functions.

For example, when an encrypted S/MIME message arrives, it initially has an S/MIME indicator icon associated therewith, such as, for example, a key or lock. When the message is opened, if the message has any logical attachments, a separate indicator (e.g., a paperclip icon) may be activated, for example, to indicate that the message has one or more attachments. Initially, the device may not know whether the message has any logical attachments, as information pertaining to logical attachments may not be present in the data that is stored locally on the device. In such a case, the device may have to wait to update the indicator until after the attachment structure has been requested (e.g., from the server). In other words, the device does not necessarily receive all of the message data in a single transmission. Typically, the device receives and stores an initial portion of the message, possibly followed by additional portions of the message that are then appended to the data stored locally. These additional portions may include, for example, logical and other attachments.

It is understood that the indicators of certain exemplary embodiments are not limited to attachment indicators. Rather, indicators may be activated with respect to any aspect of the message that is at least not initially known to the device. For example, when a message is encrypted, information may not become available until some time after the message is received and, in some cases, until after the message has been decrypted.

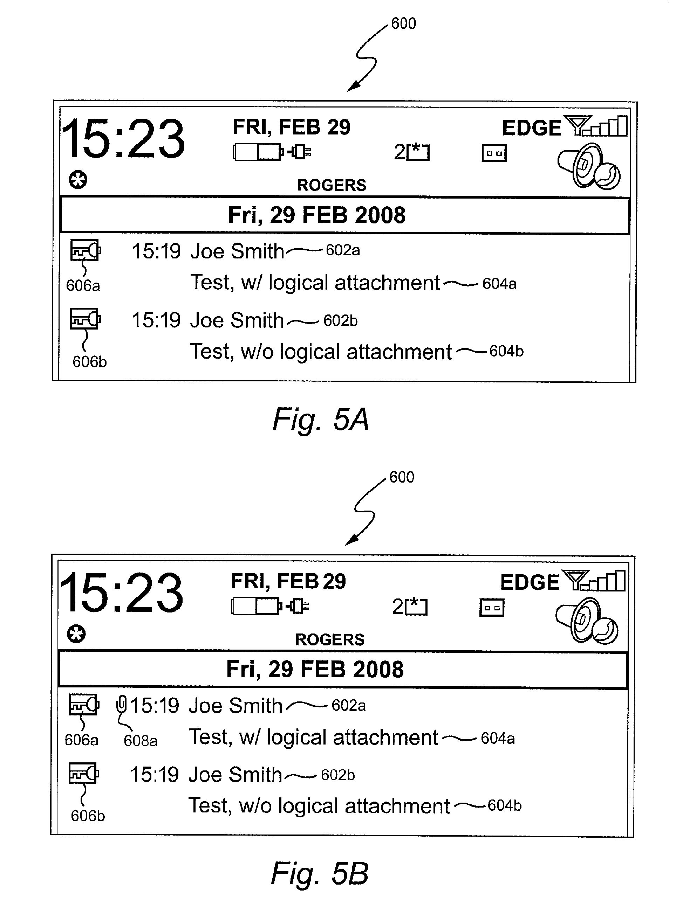

FIG. 5A is an illustrative view of an exemplary e-mail inbox on a mobile device showing e-mail message indicators before an S/MIME e-mail message is opened. FIG. 5B is an illustrative view of an exemplary e-mail inbox on a mobile device showing e-mail message indicators after the e-mail message is opened according to an exemplary embodiment. In both Figs. 5A and 5B, a illustrative main screen 600 of an e-mail client provided to a mobile wireless communication device (e.g., according to FIG. 4). The main screen 600 includes general mobile and/or basic device information for the user, such as, for example, the current date and time, the connection strength, the sound level, whether any new voicemails or e-mails have been received, the battery level, etc.

Also provided is information pertaining to two received e-mail messages. As shown in FIG. 5A, both e-mail messages were sent by the same sender 602a-b. However, the information in the subject fields 604a-b indicate that one message includes a logical attachment. Both e-mail messages are S/MIME encoded, and thus exemplary encryption indicators 606a-b are activated for both messages. At the time period represented in FIG 5A, the above-noted information is all that is known about the received messages.

However, in FIG. 5B, additional information about the messages becomes known. For example, in FIG. 5B, it is determined at the device that the first message includes a logical attachment (e.g., an attachment to the message apart from the S/MIME encoding, itself). Accordingly, an attachment indicator 608a is activated for the first received message. Because the second message does not include a logical attachment, no attachment indicator is activated despite the fact that an S/MIME (as opposed to a logical) attachment is present with the message.

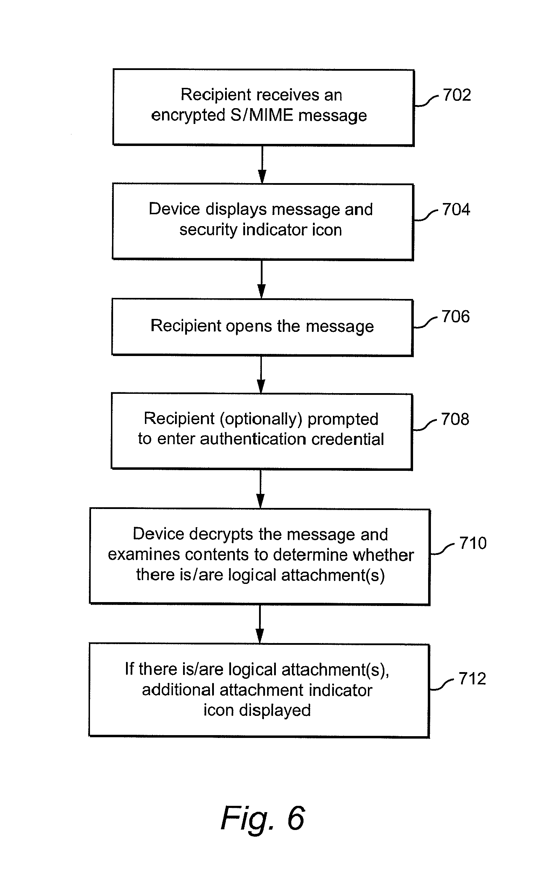

FIG. 6 is an illustrative flow diagram of an exemplary operational scenario for dynamically updating message list indicators according to an exemplary embodiment. An encrypted S/MIME message is received at step 702. The device displays information about the message and an appropriate security indicator (e.g., a key icon) to indicate that the message is encrypted 704. The message is opened at step 706. The device (optionally) prompts for entry of a password or some other authentication credential 708. If the authentication credential supplied is valid, the device decrypts the message and examines its contents to determine whether there are any logical attachments 710. If there are any logical attachments, an additional attachment indicator icon is displayed (712). For example, a new paperclip indicator icon may be displayed, the previous "key" indicator icon may be replaced with a "key and paperclip" icon indicator, etc.

Some or all of the functionality may be performed automatically and directly by the device (e.g., without any substantial direct user interaction), an e-mail client running on the device, and/or other suitable message indicator circuitry. For example, if a user's private key, password, or other authentication credential is stored on the device (e.g., in cache), the message may be automatically opened and the indicators may be automatically updated. This process may be performed transparently such that, in addition to requiring no substantial direct user interaction, the user is not necessarily aware that the message is being decrypted, temporarily opened, and then closed again.

One or more sub-steps may be included during the process of decrypting the message and examining its contents to determine whether there are any attachments 910. For example, if the device has not downloaded the encrypted data in its entirety, it generally cannot detect attachments if they begin past the point at which the data was truncated. In such a case, the device may need to download the encrypted data completely before proceeding, or it may need to consult (e.g., query and/or exchange data with) a server in order to inquire whether there were attachments to the message. Furthermore, if a server is involved, the device may need to send cryptographic information to the server in order to grant the server access to the message contents. This "round-trip" idea for retrieving attachment information from a server is described, for example, in co-pending, commonly assigned U.S. Patent Application Serial No.10/805,932 entitled "System and Method for Viewing Message Attachments," to inventors Brown et al., the disclosure of which is incorporated herein in its entirety.

As shown in FIG. 5B and described in connection therewith, the attachment indicator 608a may comprise a paperclip icon. Of course, it is understood that the present invention is not limited to any particular icon or, in fact, a visual representation of any sort. For example, certain exemplary embodiments may provide an attachment icon in the form of an icon or picture, text, a flag, a checkbox, etc. It also is understood that the present invention is not limited to indicators for attachments. As described above, the techniques of certain exemplary embodiments may be applied to any message status that is at least not initially known to a device and/or e-mail client. This may in certain non-limiting implementations come about when the e-mail message is encrypted (e.g., with S/MIME encoding).

While the foregoing has been described in conjunction with specific exemplary embodiments, it is evident that many alternatives, modifications and variations will be apparent to those skilled in the art. Accordingly, the exemplary embodiments set forth herein are intended to be illustrative, not limiting. Various changes may be made without departing from the true spirit and full scope of the invention as defined in the appended claims.

As used herein, the wording "and/or" is intended to represent an inclusive-or. That is "X and/or Y" is intended to mean X or Y or both. Moreover, "X, Y, and/or Z" is intended to mean X or Y or Z or any combination thereof.

## Claims

1. A method for processing electronic messages, the method comprising:
receiving at least part of an encrypted message at a device;
displaying a security indicator on said device to indicate that said encrypted message is encrypted;
decrypting said message;
determining whether said decrypted message includes a logical attachment;
if said decrypted message includes a logical attachment, displaying an attachment indicator on said device to indicate that said encrypted message includes a logical attachment associated with said encrypted message said logical attachment not including an encryption attachment associated with said encrypted message.

2. The method according to claim 1, wherein said device comprises a mobile wireless communications device.

3. The method according to claim 1, wherein said decrypting of said message includes prompting for entry of an authentication credential.

4. The method according to claim 1, wherein said determining comprises opening said decrypted message.

5. The method according to claim 4, wherein said opening of said decrypted message is in response to receipt of user input at said device.

6. The method according to claim 4, wherein said opening of said decrypted message is transparent.

7. The method according to claim 6, wherein said opening of said decrypted message is performed without receipt of user input.

8. The method according to claim 4, wherein said opening of said decrypted message is performed by said device using a cryptographic key previously stored on said device.

9. The method according to claim 1, further comprising receiving all of said encrypted message at said device.

10. The method according to claim 1, wherein said determining comprises querying a server to determine whether said decrypted message includes an attachment.

11. The method according to claim 10, further comprising sending cryptographic information to said server to enable said querying of said server.

12. A system for processing electronic messages, comprising:
a server for receiving an encoded message intended for a mobile device;
program logic resident on said server for processing said encoded message at said server to forward at least part of said encoded message to said mobile device; and
a wireless communications device for receiving messages from said server, said wireless communications device including program logic operable to determine whether a particular message is encoded and if the particular message includes a logical attachment said logical attachment not including an encoding attachment, and operable to display one or more indicators on said wireless communications device to indicate whether said message is encoded and whether said message includes a logical attachment independent of any encoding attachments.

13. The system according to claim 12, wherein said program logic is configured to prompt for entry of an authentication credential.

14. The system according to claim 12, wherein determining whether said message is encoded and whether said message includes an attachment that is not an encoding attachment comprises opening said message.

15. The system according to claim 14, wherein opening of said message is in response to receipt of user input at said wireless communications device.

16. The system according to claim 14, wherein opening of said message is transparent.

17. The system according to claim 16, wherein opening of said message is performed without receipt of user input.

18. The system according to claim 14, wherein said opening of said message is performed by said device using a cryptographic key previously stored on said wireless communications device.

19. The system according to claim 12, wherein said program logic is configured to receive all of said message at said wireless communications device.

20. The system according to claim 12, wherein determining whether said message is encoded and whether said message includes an attachment that is not an encoding attachment comprises querying said server to determine whether said message includes an attachment that is not an encoding attachment.

21. A method for processing electronic messages, the method comprising:
opening at least a part of an electronic message on a mobile device;
activating at least two indicators, at least one of said indicators corresponding to an aspect of said message that is not initially apparent based on the contents of said message.

22. A wireless communications device in communication with a server, the wireless communications device and the server being capable of transmitting at least a part of a message intended for said wireless communications device to said wireless communications device, said wireless communications device comprising:
program logic operable to open at least a part of said message on said mobile device and for activating at least two indicators,
wherein at least one of said indicators corresponds to an aspect of said message that is not initially apparent based on said message's content.

23. A method for processing electronic documents, the method comprising providing an indication of presence of a logical attachment in an S/MIME message if at least one logical attachment is present in said S/MIME message.

24. The method of claim 23, wherein said indication comprises a visual indication.

25. The method of claim 23, wherein said indication comprises a graphical icon.
